# EUROPEAN PATENT SPECIFICATION

(11) **EP 2 815 535 B1**
(45) Date of publication and mention of the grant of the patent: **14.11.2018**
(21) Application number: 13748649.4
(22) Date of filing: 13.02.2013
(51) Int. Cl.: H04W 12/06, G06Q 20/38, H04L 29/06, G06F 21/45, G06F 21/31, G07C 9/00

(54) **CREDENTIAL MANAGEMENT SYSTEM**
SYSTEM ZUR VERWALTUNG VON ANMELDEINFORMATIONEN
SYSTÈME DE GESTION DE JUSTIFICATIF D'IDENTITÉ

(30) Priority: 13.02.2012 US 201261598219 P
(43) Date of publication of application: 24.12.2014
(73) Proprietor: Schlage Lock Company LLC, Carmel, IN 46032 (US)
(72) Inventor: NEAFSEY, Jeffrey, S., Golden, CO 80403 (US); VITALI, Rocco, I-47121 Forli FC (IT); ANDRINI, Alberto, I-48018 Faenza (Ravenna) (IT)
(74) Representative: Ganguillet, Cyril
(86) International application number: PCT/US2013/025973
(87) International publication number: WO 2013/123079

(56) References cited:
- US-A1- 2006 010 324
- US-A1- 2006 165 060
- US-A1- 2006 165 060
- US-A1- 2008 260 149
- US-A1- 2009 113 527
- US-A1- 2011 035 604
- US-A1- 2011 145 580
- "Secure Authentication for Mobile Internet Services Critical Considerations December 2011 - V1 Secure element architects for today's generation Secure Authentication for Mobile Internet Services 2", , 31 December 2011 (2011-12-31), XP055214694, Retrieved from the Internet: URL:http://simalliance.org/wp-content/uplo ads/2015/03/12-01-01-WP_SIMallianceSecureA uthentication-EN-V1.1.pdf [retrieved on 2015-09-21]
- AARON MOSS ET AL: "A Unified Authentication Framework for Accessing Heterogeneous Web Services", NEXT GENERATION WEB SERVICES PRACTICES, 2008. NWESP '08. 4TH INTERNATIONAL CONFERENCE ON, IEEE, PISCATAWAY, NJ, USA, 20 October 2008 (2008-10-20), pages 117-122, XP031372213, ISBN: 978-0-7695-3455-8

## Description

### CROSS-REFERENCE TO RELATED APPLICATIONS

The present application claims the benefit of U.S. Provisional Patent Application No. 61/598,219, filed on February 13, 2012.

### BACKGROUND

The present invention generally relates to credentials, and more particularly, but not exclusively, relates to a credential management service. Credentials may be used in various systems and managed in various ways. Some existing systems have various shortcomings relative to certain applications. In particular, US 2006/165060 A1 relates to a method for distributing transactions credentials using SIP sessions. Accordingly, there remains a need for further contributions in this area of technology.

### SUMMARY

One embodiment of the present invention is a method according to independent claim 1. Other embodiments include a method according to claims 2 to 11. Further embodiments, forms, features, aspects, benefits, and advantages of the present application shall become apparent from the description and figures provided herewith.

### BRIEF DESCRIPTION OF THE FIGURES

The description herein makes reference to the accompanying figures wherein like reference numerals refer to like parts throughout the several views, and wherein:
FIG. 1 is a schematic block diagram of an exemplary system.
FIG. 2 is a schematic block diagram of a computing device.
FIG. 3 is a schematic block diagram of a credential and a reader device.
FIG. 4 is a schematic block diagram of an exemplary system including a cloud credential management service.
FIG. 5 is a schematic flow diagram for an exemplary process for enrolling a reader device.
FIG. 6 is a schematic flow diagram for an exemplary process for enrolling a host device.
FIG. 7 is a schematic block diagram of an exemplary system including a cloud credential management service.
FIG. 8 is a schematic flow diagram for an exemplary process for transmitting a credential to a mobile device.
FIG. 9 is a schematic block diagram of an exemplary cloud credential management service.
FIG. 10 is a schematic flow diagram of an exemplary cloud credential management service.
FIG. 11 is a schematic flow diagram of an exemplary system including a cloud credential management service and a credential administration app.

### DETAILED DESCRIPTION OF REPRESENTATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

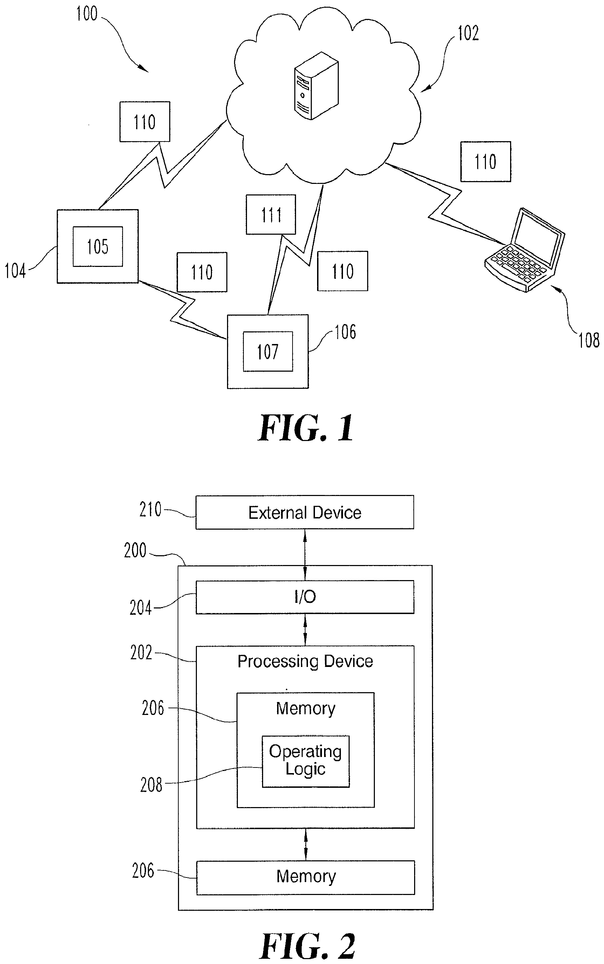

FIG. 1 illustrates a schematic block diagram of an exemplary system 100, which includes a cloud credential management service 102 that, among other things, communicates information and data to and/or from mobile devices 104, reader devices 106, and other devices such as computers 108, printers, or the like.

The cloud credential management service 102 may generate and deliver credentials 110 to the mobile devices 104, reader devices 106, and other devices such as computers 108. The credentials 110 may be in several different formats or types. In addition, the cloud credential management service 102 may generate keys 111 and transmit the keys 111 to the reader device 106 for use. The keys 111 may be several different formats or types.

In the embodiment shown in FIG. 1, the system 100 is an access control system. It is contemplated that in other embodiments, the system 100 may be a payment system, transit system, or any other system.

The mobile device 104 may be a mobile phone, such as a cell phone or smartphone, a tablet computer, such as an iPad, a smartcard, or any other type of mobile computing device. In the embodiment shown in FIG. 1, the mobile device 104 is a mobile phone. The mobile device 104 may store one or more credentials and it is contemplated that the credentials are of different types. In addition, the mobile device 104 may store the one or more credentials in a secure element. The secure element may be part of the mobile device 104. It is contemplated that the secure element may be in an accessory coupled to the mobile device 104. It is further contemplated that the secure element may be in an secure digital (SD) card, a subscriber identity module (SIM) card, a universal integrated circuit card (UICC), or the like. It is further contemplated that the secure element may be embedded in the mobile device 104 such as being attached to the logic board of the mobile device 104.

The reader device 106 may be part of system for access control, payment, transit, vending, or any other application. In addition, the reader 106 includes one or more communication modules such as an NFC system 107 to communicate with a communication module such as an Near Field Communication (NFC) system 105 of the mobile device 104. The NFC systems 105 and 107 may each include an NFC transceiver. It is contemplated that other types of wireless technologies other than or in addition to NFC may be utilized such as Bluetooth low energy, among others. In the embodiment shown in FIG. 1, the reader device 106 is an NFC reader for an electronic lock. The reader device 106 may store the credentials 110 and/or keys 111 in a secure access module (SAM). It is also contemplated that the reader device 106 may store keys 111 of several different formats or types.

Generally, the credential 110 is a string of bits of variable length. The length of the credential 110 depends on the type or format of the credential 110. The present application allows mobile devices 104 to be utilized as a credential 110 for access control, payment, transit, vending, or any other application. In the embodiment shown in FIG. 1, the credential 110 is a credential for an access control system.

In an access control system, the credential 110 may include information such as keys, access bits, a facility code, and/or a badge identifier. The credential 110 may be any type of credential such as a MIFARE Classic or MIFARE DESFire EV1. In a payment system, the credential 110 may have a different format and include different information that is pertinent determining whether a payment should be granted or denied.

The credential 110 is sometimes referred to as a virtual credential so that the credential 110 is not confused with a traditional plastic card credential. The credential 110 is capable of being stored in a mobile device 104 in which the mobile device 104 is configured to emulate or behave like a contactless smartcard and transmit at least some of the credential 110's data, e.g., facility code and badge ID, to the reader device 106.

The cloud credential management service 102 is generally implemented with one or more servers executing operating logic with a processing device. The instructions and operating logic are defined in the different aspects of the present application.

Generally, a provider makes the cloud credential management service 102 available to one or more customers over the Internet. More than one customer may connect to and utilize the various services provided by the cloud credential management service 102 concurrently. It is contemplated, that in some embodiments, credential management services may be provided without using a cloud service.

The various mobile devices 104, reader devices 106, and other devices 108 each include components, programming, and circuitry suitable to its particular application, and also include communication circuitry operatively coupled their respective antennas for communication over the Internet or NFC (or similar technology) or both.

The circuitry in the NFC systems 105 of the mobile devices 104, the NFC systems 107 in the reader devices 106, and communication modules in other devices 108 may be configured to provide appropriate signal conditioning to transmit and receive desired information (data), and correspondingly may include filters, amplifiers, limiters, modulators, demodulators, CODECs, digital signal processing, and/or different circuitry or functional components as would occur to those skilled in the art to perform the desired communications.

In one nonlimiting form, the NFC systems 105 of the mobile devices 104, the NFC systems 107 of the reader devices 106, and communication modules of the other devices 108 include circuitry to store or process information, modulate or demodulate a radio-frequency (RF) signal, or the like, or a combination thereof. The information may include a credential, identification information, status information, or any other type of information that would occur to those skilled in the art.

FIG. 2 is a schematic block diagram of a computing device 200. The computing device 200 is one example of a cloud credential management service, mobile device, reader device, and/or other device configuration which may be utilized in connection with the cloud credential management service 102, mobile device 104, reader device 106, and/or other device 108 shown in FIG. 1. Computing device 200 includes a processing device 202, an input/output device 204, memory 206, and operating logic 208. Furthermore, computing device 200 communicates with one or more external devices 210.

The input/output device 204 may be any type of device that allows the computing device 200 to communicate with the external device 210. For example, the input/output device 204 may be a NFC system including an antenna and chip, a Bluetooth system including an antenna and chip, transceiver, network adapter, network card, interface, or a port (e.g., a USB port, serial port, parallel port, an analog port, a digital port, VGA, DVI, HDMI, FireWire, CAT 5, or any other type of port or interface). The input/output device 204 may be comprised of hardware, software, firmware, and/or state machines. It is contemplated that the input/output device 204 may include more than one transceiver, network adapter, network card, or port.

The external device 210 may be any type of device that allows data to be inputted to or outputted from the computing device 200. For example, the external device 210 may be an NFC system, a Bluetooth system including a Bluetooth antenna and Bluetooth chip, a mobile device, an accessory, a reader device, equipment, a handheld computer, a diagnostic tool, a controller, a computer, a server, a processing system, a sensor, a printer, a display, an alarm, an illuminated indicator such as a status indicator, a keyboard, a mouse, or a touch screen display. Furthermore, it is contemplated that the external device 210 may be integrated into the computing device 200. For example, the computing device 200 may be a mobile phone, a handheld diagnostic tool, a smartphone, a laptop computer, or a tablet computer in which case the display would be an external device 210, but the display is integrated with the computing device 200 as one unit, which is consistent with the general design of mobile phones, handheld diagnostic tools, smartphones, laptop computers, tablet computers, and the like. It is further contemplated that there may be more than one external device in communication with the computing device 200. The computing device 200 is one example of an external device 210.

Processing device 202 can be a programmable type, a dedicated, hardwired state machine; or a combination of these; and it can further include multiple processors, Arithmetic-Logic Units (ALUs), Central Processing Units (CPUs), Digital Signal Processors (DSPs), or the like. Processing devices 202 with multiple processing units may utilize distributed, pipelined, and/or parallel processing. Processing device 202 may be dedicated to performance of just the operations described herein or may be utilized in one or more additional applications. In the depicted form, processing device 202 is of a programmable variety that executes algorithms and processes data in accordance with operating logic 208 as defined by programming instructions (such as software or firmware) stored in memory 206. Alternatively or additionally, operating logic 208 for processing device 202 is at least partially defined by hardwired logic or other hardware. Processing device 202 can be comprised of one or more components of any type suitable to process the signals received from input/output device 204 or elsewhere, and provide desired output signals. Such components may include digital circuitry, analog circuitry, or a combination of both.

Memory 206 may be of one or more types, such as a solid-state variety, electromagnetic variety, optical variety, or a combination of these forms. Furthermore, memory 206 can be volatile, nonvolatile, or a mixture of these types, and some or all of memory 206 can be of a portable variety, such as a disk, tape, memory stick, cartridge, or the like. In addition, memory 206 can store data that is manipulated by the operating logic 208 of processing device 202, such as data representative of signals received from and/or sent to input/output device 204 in addition to or in lieu of storing programming instructions defining operating logic 208, just to name one example. As shown in FIG. 2, memory 206 may be included with processing device 202 and/or coupled to the processing device 202.

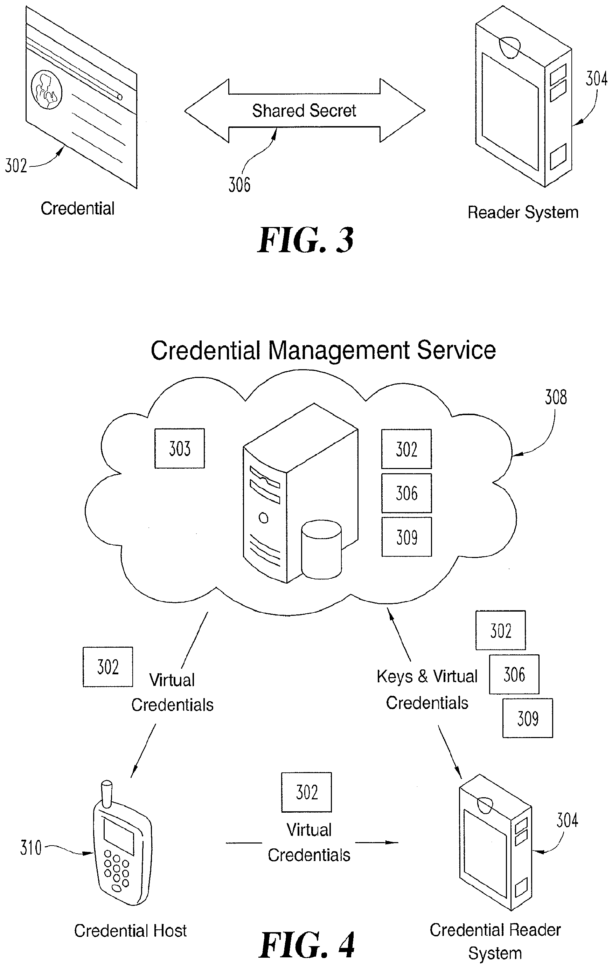

FIGs. 3-7 illustrate an exemplary embodiment of the present application. As seen in FIG. 3, credentials 302 (e.g., credentials 110) and reader systems 304 (e.g., reader device 106) share a secret key or secret information 306. The credential 302 may be based on the secret key or secret information 306. The credential 302 may be part of symmetric key system.

FIG. 4 illustrates an exemplary cloud credential management service 308 (e.g., cloud credential management service 102) that includes a master key 303. The cloud credential service 308 uses the master key 303, among other data, to generate credentials 302 and custom keys 309 (e.g., keys 111). The cloud credential management service 308 transmits the virtual credentials 302 to a credential host 310, such as the mobile device 104. The credential host 310 transmits at least a portion of the credential 302 to the credential reader system 304 (e.g., reader device 106) for access, payment, transit, or any other application.

The cloud credential management service 308 also communicates with the credential reader system 304 by transmitting and/or receiving custom keys 309 and virtual credentials 302. The reader system 304 uses the custom keys 309 to communicate with the credential host 310 because the master key 303, custom keys 309, and credentials 302 share secret information 306.

In some embodiments, the reader system 304 may receive virtual credentials 302 from the cloud credential management service 308 and store them locally to make an access control decision. For example, when a user presents a credential host 310 to the reader system 304, the reader system 304 uses the custom keys 309 to access the virtual credential 302 stored in the credential host 310. If the reader system 304 has the correct custom key 309, the credential host 310 will transmit at least a portion of the credential 302 (e.g., a facility code and badge ID) to the reader system 304. The reader system 304 may then compare the credential 302 received from the credential host 310 to the credentials 302 downloaded from the cloud credential management service 308 to determine if there is a match. If there is a match, then the reader system 304 may grant access to the user of the credential host 310 by unlocking a door. If there is not a match, then the reader system 304 will not unlock a door.

As shown in FIG. 4, mobile device credentials 302 and reader systems 304 may be programmed via Internet connections. Secret information 306 and/or keys 309 can now be managed in a cloud service 308 and may be transmitted to reader systems 304. The cloud credential management service 308 may keep track of matching credential hosts 310 (e.g., smartphones) and credential readers systems 304 via Internet connections to ensure that the credentials 302 on credential hosts 310 and keys 309 correspond to the same secret information 306. Secret information 306 and/or keys 309 can be securely distributed to reader systems 304 at arbitrary frequencies and/or using various technologies. Virtual credentials 302 can be generated and delivered to credential hosts 310 (e.g., mobile devices 104) on demand.

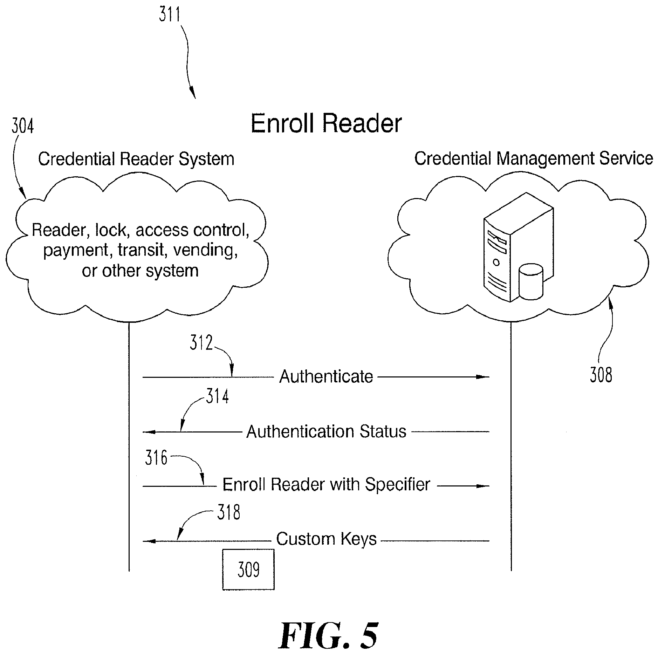

FIG. 5 illustrates an exemplary process 311 for enrolling a reader system 304 with the cloud credential management service 308. Operations illustrated are understood to be exemplary only, and operations may be combined or divided, and added or removed, as well as re-ordered in whole or in part.

Process 311 begins at operation 312 in which the reader system 304 authenticates with the cloud credential management service 308. The reader system 304 may transmit a unique ID (e.g., the reader system's serial number) and/or a password or PIN. In another embodiment, the reader system 304 may use a certificate to authenticate, which generally includes a public key and a private key to encrypt/decrypt messages between the reader system 304 and the cloud credential management service 308. In some embodiments, the reader system 304 transmits a token to the cloud credential management service 308.

Process 311 then proceeds from operation 312 to operation 314. At operation 314, the cloud credential management service 308 transmits an authentication status, which may include a token, to the reader system 304.

Process 311 then proceeds from operation 314 to operation 316. Once authenticated, at operation 316, the reader system 304 then requests to be enrolled with the credential management service 308 by sending a request along with a specifier such as a unique ID (e.g., a device ID or an email address of the site administrator). In some embodiments, the specifier may include set-up or configuration information about a particular reader system 304. In some embodiments, the specifier may include the location of the reader system 304. The reader system 304 may also send the token to the credential management service 308 to ensure an authenticated communication.

Process 311 then proceeds from operation 316 to operation 318. At operation 318, the credential management service 308 sends custom keys 309 to the reader system 304. The custom keys 309 may be stored at the credential management service 308 or may be generated by the service 308 based on the specifier (e.g., a unique ID) sent by the reader 304. The custom keys 309 are unique to the reader 304.

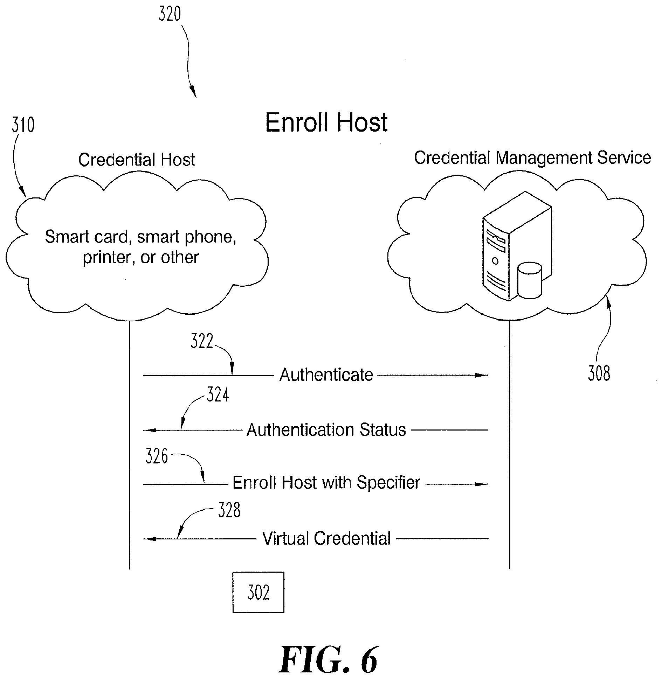

FIG. 6 illustrates an exemplary process 320 for enrolling a host 310 (e.g., a mobile device 104) with the cloud credential management service 308. Operations illustrated are understood to be exemplary only, and operations may be combined or divided, and added or removed, as well as re-ordered in whole or in part.

Process 320 begins at operation 322 in which the credential host 310 authenticates with the cloud credential management service 308 by transmitting a user ID and PIN, such as an email address and password. The credential host 310 may also transmit a globally unique identifier (GUID) to the cloud credential management service 308. In another embodiment, the credential host 310 may use a certificate to authenticate, which generally includes a public key and a private key to encrypt/decrypt messages between the credential host 310 and the cloud service 308.

Process 320 proceeds from operation 322 to operation 324. At operation 324, the cloud credential management service 308 transmits an authentication status, which may include a token, to the credential host 310.

Process 320 proceeds from operation 324 to operation 326. Once authenticated, at operation 326, the credential host 310 then requests to be enrolled with the credential management service 308 by sending a request along with a specifier such as a unique device ID. The unique device ID may be the serial number or unique number associated with the NFC system 105 that is part of the credential host 310 (e.g., mobile device 104). The credential host 310 may also send the token to the credential management service 308 to ensure an authenticated communication.

Process 320 proceeds from operation 326 to operation 328. At operation 328, the credential management service 308 generates a virtual credential 302 and sends the virtual credential 302 to the credential host 310. The credential management service 308 may generate the virtual credential 302 based on the unique device ID by hashing the unique ID with the master key 303.

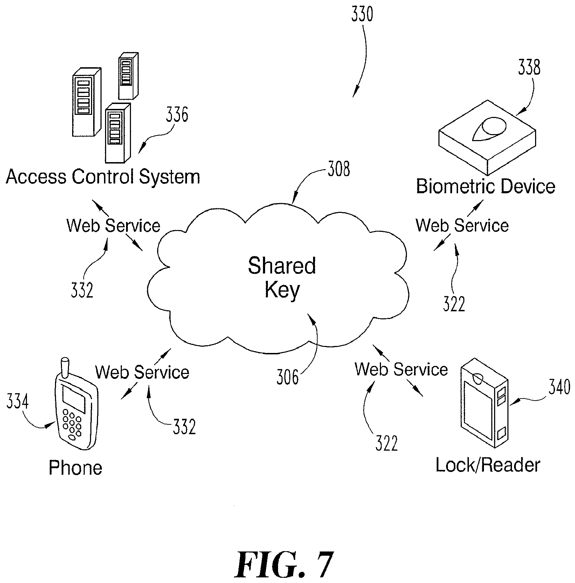

FIG. 7 illustrates an exemplary system 330 in which a cloud credential management service 308 shares a secret key or secret information 306 by distributing credentials 302 and/or custom keys 309 to devices, readers, and systems through web services 332. For example, the devices, readers, and systems may include a mobile phone 334, an access control system 336, a biometric device 338, and/or a lock/reader 340.

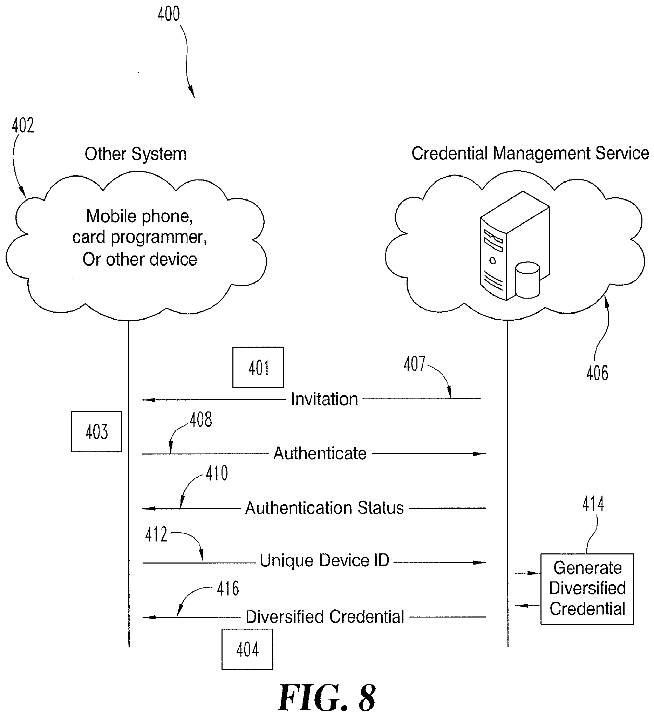

FIG. 8 illustrates another embodiment of the present application including an exemplary process 400 in which a mobile device 402, such as a smartcard or mobile phone, or a card programming device downloads a mobile or virtual credential 404 from a cloud credential management service 406. Operations illustrated are understood to be exemplary only, and operations may be combined or divided, and added or removed, as well as re-ordered in whole or in part.

Process 400 begins at operation 407 in which the cloud credential management service 406 transmits an invitation 401 to the mobile device 402. The invitation 401 may be an email, push notification, and/or a text message. The invitation 401 is processed by an application 403 in the mobile device 402. The invitation 401 includes a uniform resource identifier (URI) that includes a uniform resource locator (URL) to the cloud credential management service 406 for downloading the credential 404.

The cloud credential management service 406 may transmit the invitation 401 to mobile device 402 in response to receiving a credential request from a customer. The information in the credential request from the customer may be stored in a database in the cloud credential management service 406. It is contemplated that the invitation 401 may come from a customer and not the cloud credential management service 406.

Process 400 then proceeds from operation 407 to operation 408. At operation 408, the mobile device 402 authenticates with the cloud credential management service 406 by the application 403 using the URL in the invitation 401. The URL may include arguments in a query string such as a user ID, PIN, and/or GUID. The user ID may be an email address. The PIN may be a password. For example, the mobile device 402 connects to the cloud credential management service 406 using a Hypertext Transfer Protocol Secure (HTTPS) connection, which uses Secure Sockets Layer (SSL).

Process 400 then proceeds from operation 408 to operation 410. At operation 410, upon receiving an acceptable user ID and PIN (such as by comparing the received user ID and PIN to the ones received in the database in the cloud credential management service 406), the cloud credential management service 406 sends an authentication status, which may include a token, to the mobile device 402. Once the device 402 has been authenticated, the communications between the device 402 and the cloud credential management service 406 may occur over secure sockets, such as using secure sockets layer (SSL), over the Internet.

Process 400 then proceeds from operation 410 to operation 412. At operation 412, the device 402 then sends a unique device identifier to the credential management service 406 along with the token. It is contemplated that in some embodiments the token is not sent. The unique device ID may be the serial number or unique number associated with the NFC system 105 that is part of the mobile device 402 (e.g., mobile device 104).

Process 400 then proceeds from operation 412 to operation 414. At operation 414, the credential management service 406 then generates a unique diversified credential 404 using the unique device identifier that is hashed using a master key (e.g., master key 303).

Process 400 then proceeds from operation 414 to operation 416. At operation 416, the unique diversified credential 404 is then sent from the cloud credential management service 406 to the mobile device 402. For example, the cloud credential management service 406 may encrypt the credential 404 and encapsulate the encrypted credential in a package such as a JavaScript Object Notation (JSON) object, an XML-format message to the mobile device 402, or the like. The cloud credential management service 406 may then transmit the package to the mobile device 402.

The application 403 on the mobile device 402 receives, unpackages, and/or decrypts the credential 404. The mobile device 402 may store the credential 404 in a secure element. The mobile device 402 may then use the unique diversified credential 404 for access control, payment, transit, vending, or any other application. Generally, with this method of delivery, credentials 404 can be securely programmed onto cards, phones, and other devices remotely, rather than with a card programmer.

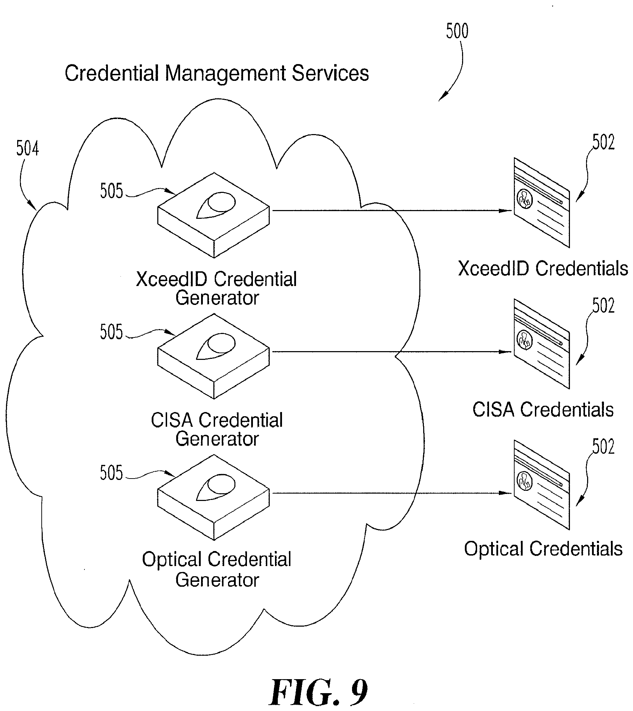

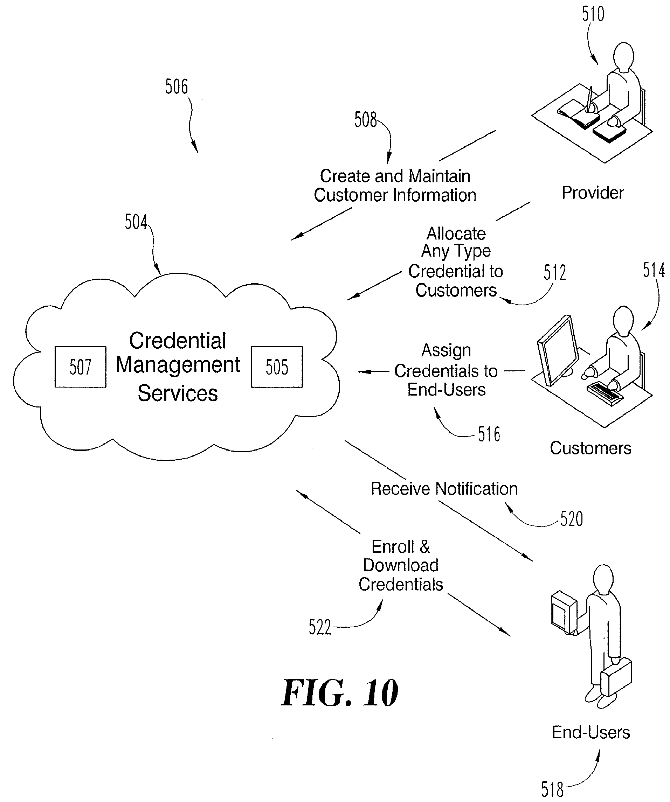

FIGs. 9 and 10 illustrate another embodiment of the present application of an exemplary system 500 in which different types of credentials 502 may be generated and hosted in a cloud credential management service 504. There are credentials of different types (e.g., CISA, XceedID, etc.) and each credential type has distinct algorithms which take source information and encode it so that the credential can be transmitted to a credential host (mobile device 104, e.g., a smartcard or smartphone). Virtual credential generators 505 generate the various types of credentials 502 supported by the cloud credential management service 504. The credential 502 is then presented to and read by a credential reader system 106 (as shown in FIG. 1). The credential generators 505 may include a processing device and operating logic configured to generate the particular type of credential requested using information such as a unique device identifier that is hashed with a master key 303.

As seen in FIG. 9, by virtualizing these credentials 502 (i.e., generating them in a central cloud credential management service 504 rather than on type specific programmers) several features may be realized. For example, worldwide encoding schemes can be consolidated into one central cloud credential management service 504. Rather than creating and selling hardware devices that create credentials, the virtual credentials 502 themselves may be sold, which are hosted by and delivered to a mobile device 104 such as a smartphone. Virtual credentials 502 may be written to any credential host (e.g., a mobile device 104 such as a smartcard, smartphone, or the like). Virtual credentials 502 can be generated by the cloud credential management service 504 in multiple formats (e.g., prox, MIFARE Classic, MIFARE DESFire EV1, optical, XceedlD, elSA, bar code, QR code) depending on the requesting host. Virtual credentials 502 can be generated and encoded for multiple regions and localities (e.g., Americas, Europe, Asia etc.). Customers of the cloud credential management service 504 may purchase these virtual credentials 502 and have them generated on demand by the cloud credential management service 504.

FIG. 10 illustrates a schematic flow diagram of an exemplary process 506. Operations illustrated are understood to be exemplary only, and operations may be combined or divided, and added or removed, as well as re-ordered in whole or in part.

Process 506 begins at operation 508 in which an owner or provider 510 of the cloud credential management service 504 creates and maintains customer information in the cloud credential management service 504. For example, the cloud credential management service 504 may store customer information, among other data, in a database 507.

Process 506 proceeds from operation 508 to operation 512. At operation 512, the provider 510 allocates any type of credential 502 to customers 514 using the cloud credential management service 504. For example, a customer may purchase 500 credentials for their company. The cloud credential management service 504 may allocate 100 virtual credentials for the customer's employees who may download the credentials once generated.

Process 506 proceeds from operation 512 to operation 516. At operation 516, customers 514 may assign credentials 502 to end-users 518 using the cloud credential management service 504. For example, the customer may send a credential request to the cloud credential management service 504 that includes information about the user, information about site, information about the format and type of credential, and/or other similar information. The credential request may be a web service call.

Process 506 proceeds from operation 516 to operation 520. At operation 520, the end-users 518 may receive notifications (e.g., an email, push notification, or text message) concerning the availability of credentials 502 at the cloud credential management service 504.

Process 506 proceeds from operation 520 to operation 522. At operation 522, the end-users 518 enroll and download credentials 502 from the cloud credential management service 504. As described with respect to FIG. 8, an application on the mobile device of the end-user 518 utilizes the URL in the notification to enroll with the cloud credential management service 504. Once enrolled, the cloud credential management service 504 generates a credential 502 based on the unique device ID and a master key. After the credential 502 is generated, the cloud credential management service 504 may encrypt the credential and transmit the encrypted credential in a JSON object or an XML format-message. An application on the mobile device receives, unpackages, and/or decrypts the credential 502.

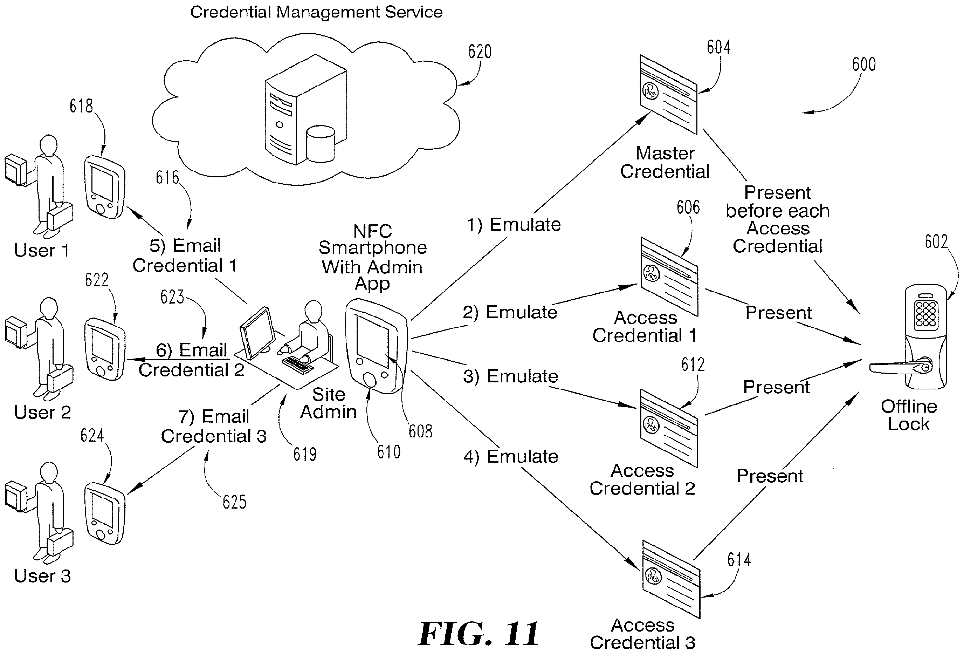

FIG. 11 illustrates a schematic flow diagram of an exemplary process 600 of the present application in which a reader device 602, such as an offline lock, is manageable through NFC. To reset the lock 602, a button on the lock is pressed and a master credential 604 is presented close to the lock 602. The master credential 604 then becomes the mechanism for adding new access credentials 606, 612, 614 to the lock. After the master credential 604 is programmed, the master credential 604 is presented to the lock 602, then within a few seconds an access credential 606 is presented. The access credential 606 is then granted access to the lock 602.

In FIG. 11, a credential administration application or app 608, in the form of operating logic 208 as in FIG. 2, for a mobile device (e.g., 104), such as an NFC-enabled smartphone 610, acts like (i.e., emulates) the master credential 604 and several access credentials 606, 612, 614.

In one embodiment, to program credentials 606, 612, 614 on the lock 602, a smartphone 610 includes the credential administration app 608. The lock 602 is initialized with the credential administration app 608 on the smartphone 610 by emulating the master credential 604. Then, access credentials 606, 612, 614 may be programmed from the same smartphone 610 using the credential administration app 608. For example, the credential administration app 608 on the smartphone 610 may toggle back and forth between emulating the master credential 604 and emulating the access credentials 606, 612, 614.

In one embodiment, a notification such as an email 616 may be sent to the end-user NFC-enabled phone 618 with a link (e.g., a URL) or instructions on how to download the access credential 606 from the cloud credential management service 620. It is contemplated that the notification may also be a push notification, text message, or any other type of electronic message.

In another embodiment, an email 616, containing the access credential 606, may be sent to an end-user NFC-enabled phone 618. In yet another embodiment, a physical access card (not shown) may be programmed using the credential administration app 608 on the smartphone 610 as a card programmer.

It is contemplated that the cloud credential management service 620 may transmit the master credential 604 and/or access credentials 606, 612, 614 to the smartphone 610 for use. It is also contemplated that the smartphone 610 may transmit the programmed access credentials 606, 612, 614 to the cloud credential management service 620 for distribution.

The following are operations for managing credentials in an offline lock 602 as shown in FIG. 11. Operations illustrated are understood to be exemplary only, and operations may be combined or divided, and added or removed, as well as re-ordered in whole or in part.

Process 600 begins at operation 1 in which the credential administration app 608 on the smartphone 610 is launched, and 'master credential' is selected in the app 608. The NFC-enabled smartphone 610 may be presented to the lock/reader 602. The lock 602 may provide visual and audible feedback that the master credential 604 has been programmed. In addition, this will place the lock 602 in a building, construction, or programming mode so that access credentials can be programmed into the lock 602.

Process 600 then proceeds from operation 1 to operation 2. At operation 2, 'create new access credential' may be selected and the smartphone 610 first emulates the master credential 604, waits for a second or two, and then emulates a new access credential 606. The lock 602 may provide visual and audible feedback that the new access credential 606 has been created or granted access.

Process 600 proceeds from operation 2 to operation 3, which is generally the same as operation 2 except a new distinct 'access' credential 612 is created or granted access. Similarly, operation 4 is generally the same as operation 2 except that yet another distinct 'access' credential 614 is created or granted access.

Process 600 proceeds from operation 4 to operation 5. At operation 5, on the credential administration app 608 on the smartphone 610, 'send credential to user' can be selected and an email 616 is sent to an end-user with a link (e.g., a URL) to enroll and download the credential 606 as discussed with respect to FIGs. 8 and 10. It is contemplated that in some embodiments the email include the credential rather than a link for downloading the credential. It is contemplated that the notifications, such as email 616, may be sent by a computing device other than the smartphone 610 such as by the cloud credential management service 620 or by the computer 619 of the administrator of the access control system.

The end-user receives the email 616, authenticates, and downloads the access credential 606 to their NFC enabled phone 618 from the cloud credential management service 620. Operation 6 is generally the same as operation 5 except a different credential 612 is sent to smartphone 622 via a link in email 623. Operation 7 is generally the same as operation 5 except a different credential 614 is sent to smartphone 624 via a link in email 625. This aspect of the present application may simplify the programming of offline electronic locks and simplify the distribution of credentials to offline lock users.

It is contemplated that the various aspects, features, computing devices, processes, and operations from the various embodiments may be used in any of the other embodiments unless expressly stated to the contrary.

The various aspects of the processes in the present application may be implemented in operating logic 208 as operations by software, hardware, artificial intelligence, fuzzy logic, or any combination thereof, or at least partially performed by a user or operator. In certain embodiments, operations represent software elements as a computer program encoded on a computer readable medium, wherein the cloud credential management service, mobile device, and/or reader device performs the described operations when executing the computer program.

One embodiment of the present application includes a method, comprising: enrolling a reader system with a cloud credential management service; enrolling a host with the cloud credential management service; and transmitting a virtual credential to the host from the cloud credential management service.

Additional features of the embodiment may include: wherein the host is a mobile device; and/or transmitting a custom key to the reader system.

Another embodiment of the present application includes a method, comprising: transmitting, with a mobile device, a user ID and PIN to a cloud credential management service; receiving, with the mobile device, an authentication status from the cloud credential management service; transmitting, with the mobile device, a device ID to the cloud credential management service; and receiving, with the mobile device, a diversified credential from the cloud credential management service.

Additional features of the embodiment may include: wherein the mobile device is a mobile phone; wherein the authentication status includes a token; and/or wherein the mobile device transmits the token with the device ID.

Yet another embodiment of the present application includes a method, comprising: receiving, with a cloud credential management service, a user ID and PIN from a mobile device; transmitting, with the cloud credential management service, an authentication status including a token to the mobile device; receiving, with the cloud credential management service, a device ID from the mobile device; generating, with the cloud credential management service, a diversified credential based on the device ID; and transmitting, with the cloud credential management service, the diversified credential to the mobile device.

Another embodiment of the present application includes a method, comprising: hosting a cloud credential management service over the Internet; providing access to the cloud credential management service to a customer to allow the customer to assign a credential to an end-user's mobile device; and transmitting the credential to the end-user's mobile device.

Additional features of the embodiment may include: wherein the mobile device is a mobile phone; and/or wherein the cloud credential management service is structured to generate credentials in a plurality of formats.

Yet another embodiment of present application includes a method, comprising: hosting a cloud credential management service; receiving, with the cloud credential management service, requests to generate credentials in a plurality of formats; and delivering, with the cloud credential management service, the credentials to mobile devices.

Additional features of the embodiment may include: wherein the format includes at least one of prox, Mifare, EV1, optical, XceedlD, and elSA; and/or wherein the credential is structured to be read by a reader.

Another embodiment of the present application includes a system, comprising: a plurality of servers having processing devices and operating logic in memory, wherein the operating logic when executed includes a cloud credential management service; a customer computer operable to connect to the cloud credential management service over the Internet and assign credentials to end-users; and a plurality of mobile devices of the end-users, wherein the mobile devices are structured to receive the credentials from the cloud credential management service.

Yet another embodiment of the present application includes a system, comprising: a reader coupled to a door lock, wherein the reader is structured to open the door lock when a registered credential is presented; an administrative mobile device including means for selectively transmitting wirelessly a master credential and an end-user credential to the reader to register the reader to accept the end-user credential; and a server including means for hosting a cloud credential management service, wherein the server is structured to transmit the end-user credential to an end-user mobile device.

Additional features of the embodiment may include: wherein the mobile device is a mobile phone.

Yet another embodiment of the present application includes a method, comprising: programming a plurality of credentials in a reader with a mobile phone; notifying end-users to download credentials from a cloud credential management service; and providing, with the cloud credential management service, credentials to the end-users.

Another embodiment of the present application includes a method, comprising: receiving a notification with a mobile device; utilizing, with the mobile device, information in the notification to request a server to generate a credential; receiving, with the mobile device, a package from the server; extracting the credential from the package; and storing the credential in a secure element of the mobile device.

Additional features of the embodiments may include: wherein the notification is at least one of an email, a text message, and a push notification; wherein the package is at least one of a JSON object and an XML-formatted message; decrypting the credential before storing the credential in the secure element; wherein the information includes a uniform resource locator; authenticating the mobile device with the server based on an argument string in the URL; and/or wherein the mobile device is a mobile phone.

Yet another embodiment of the present application includes a method, comprising: transmitting, from a reader device, a request for a server to generate a reader key, wherein the request includes a specifier; receiving the reader key from the server; and storing the reader key in a secure access module of the reader device.

Additional features of the embodiments may include: utilizing, with the reader device, the reader key to communicate with a mobile device to receive at least a portion of a mobile device credential from the mobile device; transmitting, from the reader device, a request for the server to transmit one or more reader device credentials to the reader device; receiving, with the reader device, the one or more reader device credentials from the server; and storing the one or more reader device credentials in the secure access module of the reader device; and/or determining, with the reader device, whether to grant an action request based on analysis of the at least a portion of the mobile device credential and one or more of the reader device credentials.

Another embodiment of the present application includes a system, comprising: a server configured with non-transitory computer executable instructions to generate a credential based on a unique device identifier and a master key, to encrypt the credential, and to encapsulate the encrypted credential in a package; and a mobile device in communication with the server, wherein the mobile device is configured with non-transitory computer executable instructions to authenticate with the server, to transmit the unique device identifier to the server, and to download the package from the server.

Additional features of the embodiments may include: wherein the server is further configured with non-transitory computer executable instructions to generate a reader key based on a specifier and the master key; a reader device in communication with the server, the reader device configured with non-transitory computer executable instructions to authenticate with the server, to transmit the specifier to the server, and to download the reader key from the server; wherein the mobile device comprises a NFC communication module configured to transmit at least a portion of the credential to a NFC communication module of the reader device; wherein the reader device includes a secure access module to store the reader key; wherein the system is one of an access control system, a payment system, a transit system, and a vending system; wherein the server includes a plurality of credential generators, wherein each of the credential generators is configured to generate a different type of credential; wherein the mobile device is configured to receive and store a plurality of credentials, wherein each of the plurality of credentials is a different type of credential; and/or wherein the mobile device is a mobile phone.

Yet another embodiment of the present application includes a method, comprising: providing, with at least one server, a cloud credential management service including generating credentials of at least two different types; receiving, with the server, a credential request from a customer computer to assign a virtual credential to a mobile device; and transmitting, with the server, the virtual credential to the mobile device.

Additional features of the embodiments may include: wherein the mobile device is a mobile phone; generating the virtual credential based on a unique device identifier and a master key; encrypting the virtual credential; and encapsulating the virtual credential in a package before transmitting the virtual credential to the mobile device; receiving a key request from the customer computer to assign a reader key to a reader device; and transmitting the reader key from the server to the reader device; generating the reader key based on a specifier and a master key; and/or wherein the server is in communication with a plurality of customer computers, wherein the plurality of customer computers include at least two different customers.

Another embodiment of the present application includes an apparatus, comprising: one or more servers communication with a plurality of customer computers, wherein the one or more servers are configured with non-transitory computer executable instructions to manage credentials of a plurality of different types, to receive credential requests from the customer computers, to generate virtual credentials in response to the credential requests, and to deliver the virtual credentials to mobile devices.

Additional features of the embodiments may include: wherein the one or more servers are configured with non-transitory computer executable instructions to encrypt the virtual credentials, to encapsulate the encrypted credentials in packages, and to deliver the virtual credentials to the mobile devices by transmitting the packages to the mobile devices; wherein the one or more servers are configured with non-transitory computer executable instructions to receive key requests from the customer computers, generate reader keys for reader devices in response to the key requests, and to deliver the reader keys to the reader device; wherein the virtual credentials include at least one of access control credentials, payment credentials, transit credentials, and vending credentials; wherein the mobile device is a mobile phone.

Yet another embodiment of the present application includes a system, comprising: a plurality of servers configured with non-transitory computer executable instructions to receive credential requests and generate virtual credentials, wherein the virtual credentials are in a plurality of formats; a plurality of customer computers configured with non-transitory computer executable instructions to connect to the servers to request assignment of the virtual credentials to end-users; and a plurality of mobile devices of the end-users, wherein the mobile devices are configured with non-transitory computer executable instructions to receive the virtual credentials from the servers.

Additional features of the embodiments may include: a reader device configured to receive a reader key from the plurality of servers; and/or wherein the system is at least one an access control system, a payment system, a transit system, and a vending system.

Another embodiment of the present application may include a method, comprising: managing credentials of a plurality of different types; receiving credential requests from the customer computers to assign virtual credentials to mobile devices; generate virtual credentials in response to the credential requests; and deliver the virtual credentials to mobile devices.

Additional features of the embodiments may include: encrypting the virtual credentials; encapsulating the encrypted credentials in packages; and delivering the virtual credentials to the mobile devices by transmitting the packages to the mobile devices; receiving key requests from the customer computers; generating reader keys for reader devices in response to the key requests; and delivering the reader keys to the reader device; wherein the virtual credentials include at least one of access control credentials, payment credentials, transit credentials, and vending credentials; and/or wherein the mobile device is a mobile phone.

Yet another embodiment of the present application may include a method, comprising: presenting a mobile device within a field of a reader device; emulating a master credential with the mobile device to place the reader device in a programming mode; and emulating a plurality of user credentials with the mobile device to program the user credentials into the reader device;

Additional features of the embodiments may include: receiving, with the mobile device, at least one of the master credential and the user credentials from a server; transmitting, with the mobile device, the user credentials to the server; wherein the reader device is an electronic lock; wherein the mobile device is a mobile phone; transmitting a notification to mobile phones associated with the user credentials, wherein the notification includes a status of an associated user credential; wherein the notification is one of an email and a text message; wherein the notification includes the corresponding user credential; wherein the notification includes a uniform resource locator associated with a server, wherein the server is configured to store the user credentials and provide the user credentials for downloading.

Another embodiment of the present application includes a system, comprising: a reader device configured to actuate a lock when presented with a registered user credential; and an administrative mobile device configured to wirelessly transmit a master credential to the reader device to place the reader device in a programming mode, wherein the administrative mobile device is further configured to wirelessly transmit a user credential to the reader device when the reader device is in the programming mode to register the user credential in the reader device.

Additional features of the embodiments may include: wherein the administrative mobile device is a mobile phone; a server configured to transmit the user credential to a user mobile device; wherein the server is further configured to generate credentials in a plurality of formats; wherein the server is further configured to transmit the master credential to the administrative mobile device.

Another embodiment of the present application includes an apparatus, comprising: a mobile phone configured to wirelessly emulate a master credential to place a reader device in a programming mode and to wirelessly emulate a plurality of user credentials to program the user credentials into the reader device.

Additional features of the embodiments may include: wherein the mobile phone is configured to receive at least one of the master credential and the user credentials from a server; wherein the reader device is an electronic lock; wherein the mobile phone is configured to transmit a notification to user mobile phones associated with the user credentials; wherein the notification is one of an email and a text message; and/or wherein the notification includes the corresponding user credential.

While the invention has been illustrated and described in detail in the drawings and foregoing description, the same is to be considered as illustrative and not restrictive in character, it being understood that only the preferred embodiments have been shown and described and that all changes and modifications that come within the scope defined by the claims that follow are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A method, comprising:
receiving a notification (401) with a mobile device (104, 310, 402) in response to a credential request from a customer, wherein the notification (401) includes a uniform resource locator (URL) of a cloud credential management server (102, 308, 406, 504);
authenticating the mobile device (104, 310, 402) with the cloud credential management server (102, 308, 406, 504) based on an argument string in the URL;
utilizing, with the mobile device (104, 310, 402), information in the notification to request the cloud credential management server (102, 308, 406, 504) to generate a credential (110, 302, 404, 502) wherein the credential (110, 302, 404, 502) is a unique diversified credential (110, 302, 404, 502) generated by the cloud credential management server (102, 308, 406, 504);
receiving, with the mobile device (104, 310, 402), a package from the cloud credential management server (102, 308, 406, 504) in response to the request;
extracting the unique diversified credential (110, 302, 404, 502) from the package; and
storing the unique diversified credential (110, 302, 404, 502) in the mobile device (104, 310, 402);
wherein the request sent by the mobile device (104, 310, 402) to the cloud credential management server (102, 308, 406, 504) includes a unique identifier associated with the mobile device (104, 310, 402); wherein the unique diversified credential (110, 302, 404, 502) is generated by the cloud credential management server (102, 308, 406, 504) by hashing the unique identifier with a master key (111, 303); wherein
the unique diversified credential (110, 302, 404, 502) is of a particular format and region for the mobile device (104, 310, 402); wherein the format of the unique diversified credential (110, 302, 404, 502) is either MIFARE Classic or MIFARE DESFire EV1; and wherein the unique diversified credential (110, 302, 404, 502) is encrypted before it is encapsulated in the package.

2. The method of claim 1, wherein the notification (401) is at least one of an email, a text message, and a push notification.

3. The method of claims 1 or 2, wherein the package is at least one of a JSON object and an XML-formatted message.

4. The method of any one of claims 1-3, further comprising:
decrypting the unique diversified credential (110, 302, 404, 502) before storing the unique diversified credential (110, 302, 404, 502) in the mobile device (104, 310, 402).

5. The method of any one of claims 1-4, wherein the mobile device (104, 310, 402) is a mobile phone.

6. The method of any one of claims 1-5, further comprising:
transmitting, from a reader device (106, 304, 602), a request for the cloud credential management server (102, 308, 406, 504)_to generate a reader key (111, 309), wherein the request includes a specifier;
receiving the reader key (111, 309) from the cloud credential management server (102, 308, 406, 504);
storing the reader key (111, 309) in a secure access module of the reader device (106);
utilizing, with the reader device (106, 304), the reader key (111, 309) to communicate with the mobile device (104, 310, 402) to receive at least a portion of the unique diversified credential (110, 302, 404, 502) from the mobile device (104, 310, 402);
transmitting, from the reader device (106, 304), a request for the cloud credential management server (102, 308, 406, 504)_to transmit one or more reader device credentials (110, 302) to the reader device (106, 304, 602);
receiving, with the reader device (106, 304), the one or more reader device credentials (110, 302) from the cloud credential management server (102, 308, 406, 504);
storing the one or more reader device credentials (110, 302) in the secure access module of the reader device (106, 304); and
determining, with the reader device (106, 304), whether to grant an action request based on analysis of the at least a portion of the unique diversified credential (110, 302, 404, 502) and one or more of the reader device credentials (110, 302).

7. The method of any one of claims 1-6, further comprising:
receiving, with the cloud credential management server (102, 308, 406, 504), the request to generate the unique diversified credential (110, 302, 404, 502); and
transmitting, with the cloud credential management server (102, 308, 406, 504), the unique diversified credential (110, 302, 404, 502) to the mobile device (104, 310, 402).

8. The method of claim 7, wherein the mobile device (104, 310, 402) is a mobile phone.

9. The method of any one of claims 7-8, further comprising:
receiving a key request from the customer computer to assign a reader key (111, 309) to a reader device (106, 602); and
transmitting the reader key (111, 309) from the cloud credential management server (102, 308, 406, 504) to the reader device (106, 602).

10. The method of claim 9, further comprising:
generating the reader key (111, 309) based on a specifier and a master key (303).

11. The method of any one of claims 7-10, wherein the cloud credential management server (102, 308, 406, 504) is in communication with a plurality of customer computers, wherein the plurality of customer computers include at least two different customers.

## Patentansprüche

1. Ein Verfahren, umfassend:
Empfang einer Mitteilung (401) mit einer mobilen Vorrichtung (104, 310, 402) in Reaktion auf eine Credentialsanfrage von einem Kunden, wobei die Mitteilung (401) einen Uniform Resource Locator (URL) eines Cloud-Credential-Managementservers (102, 308, 406, 504) enthält;
Authentifizierung der mobilen Vorrichtung (104, 310, 402) mit dem Cloud-Credential-Managementserver (102, 308, 406, 504) basierend auf einem Argumentestring in der URL;
Verwendung, mit der mobilen Vorrichtung (104, 310, 402), von Informationen in der Mitteilung, um von dem Cloud-Credential-Managementserver (102, 308, 406, 504) aufzufordern ein Credential (110, 302, 404, 502) zu erzeugen, wobei das Credential (110, 302, 404, 502) ein eindeutiges diversifizierte Credential (110, 302, 404, 502) ist, das durch den Cloud-Credential-Managementserver (102, 308, 406, 504) erzeugt wurde;
Empfang, mit der mobilen Vorrichtung (104, 310, 402), eines Pakets von dem Cloud-Credential-Managementserver (102, 308, 406, 504) in Reaktion auf die Anfrage;
Extrahieren des eindeutigen diversifizierten Credentials (110, 302, 404, 502) aus dem Paket; und
Speichern des eindeutigen diversifizierten Credentials (110, 302, 404, 502) in der mobilen Vorrichtung (104, 310, 402);
wobei die Anfrage, die durch die mobile Vorrichtung (104, 310, 402) an den Cloud-Credential-Managementserver (102, 308, 406, 504) gesendet wird, eine eindeutige Kennung enthält, die mit der mobilen Vorrichtung (104, 310, 402) verbunden ist;
wobei das eindeutige diversifizierte Credential (110, 302, 404, 502) durch den Cloud-Credential-Managementserver (102, 308, 406, 504) durch Hashen der eindeutigen Kennung mit einem Masterschlüssel (111, 303) erzeugt wird;
wobei das eindeutige diversifizierte Credential (110, 302, 404, 502) von einem bestimmten Format und einer bestimmten Region für die mobile Vorrichtung (104, 310, 402) ist; wobei das Format des eindeutigen diversifizierten Credentials (110, 302, 404, 502) entweder MIFARE Classic oder MIFARE DESFire EV1 ist; und wobei das eindeutige diversifizierte Credential (110, 302, 404, 502) verschlüsselt wird, bevor es in dem Paket verkapselt werden.

2. Das Verfahren nach Anspruch 1, wobei die Mitteilung (401) mindestens eine aus einer E-Mail, einer Textnachricht und einer Push-Mitteilung ist.

3. Das Verfahren nach Anspruch 1 oder 2, wobei das Paket mindestens ein oder eine aus einem JSON-Objekt und einer XML-formatierte Nachricht ist.

4. Das Verfahren nach einem der Ansprüche 1 bis 3, ferner umfassend:
Entschlüsseln des eindeutigen diversifizierten Credentials (110, 302, 404, 502) vor dem Speichern des eindeutigen diversifizierten Credentials (110, 302, 404, 502) in der mobilen Vorrichtung (104, 310, 402).

5. Das Verfahren nach einem der Ansprüche 1 bis 4, wobei die mobile Vorrichtung (104, 310, 402) ein Mobiltelefon ist.

6. Das Verfahren nach einem der Ansprüche 1 bis 5, ferner umfassend:
Übertragung, von einer Lesevorrichtung (106, 304, 602), einer Anfrage an den Cloud-Credential-Managementserver (102, 308, 406, 504), einen Leseschlüssel (111, 309) zu erzeugen, wobei die Anfrage einen Spezifizierer enthält;
Empfang des Leseschlüssels (111, 309) von dem Cloud-Credential-Managementserver (102, 308, 406, 504);
Speichern des Leseschlüssels (111, 309) in einem sicheren Zugriffsmodul der Lesevorrichtung (106);
Nutzung, mit der Lesevorrichtung (106, 304), des Leseschlüssels (111, 309), um mit der mobilen Vorrichtung (104, 310, 402) zu kommunizieren, um mindestens einen Abschnitt des eindeutigen diversifizierten Credentials (110, 302, 404, 502) von der mobilen Vorrichtung (104, 310, 402) zu empfangen;
Übertragung, von der Lesevorrichtung (106, 304), einer Anfrage an den Cloud-Credential-Managementserver (102, 308, 406, 504), ein oder mehrere Lesevorrichtung-Credentials (110, 302) an die Lesevorrichtung (106, 304, 602) zu übertragen;
Empfang, mit der Lesevorrichtung (106, 304), des einen oder mehreren Lesevorrichtung-Credentials (110, 302) von dem Cloud-Credential-Managementserver (102, 308, 406, 504);
Speichern des einen oder mehreren Lesevorrichtungs-Credentials (110, 302) in dem sicheren Zugriffsmodul der Lesevorrichtung (106, 304); und
Bestimmung, mit der Lesevorrichtung (106, 304), ob eine Aktionsanfrage auf Grundlage der Analyse des mindestens einen Abschnitts des eindeutigen diversifizierten Credentials (110, 302, 404, 502) und des einen oder mehreren der Lesevorrichtung-Credentials (110, 302) gewährt werden soll.

7. Das Verfahren nach einem der Ansprüche 1 bis 6, ferner umfassend:
Empfang, mit dem Cloud-Credential-Managementserver (102, 308, 406, 504), der Anfrage, das eindeutige diversifizierte Credential (110, 302, 404, 502) zu erzeugen; und
Übertragung, mit dem Cloud-Credential-Managementserver (102, 308, 406, 504), des eindeutigen diversifizierten Credentials (110, 302, 404, 502) an die mobile Vorrichtung (104, 310, 402).

8. Das Verfahren nach Anspruch 7, wobei die mobile Vorrichtung (104, 310, 402) ein Mobiltelefon ist.

9. Das Verfahren nach einem der Ansprüche 7 bis 8, ferner umfassend:
Empfang einer Schlüsselanfrage von dem Kundencomputer zum Zuordnen eines Leseschlüssels (111, 309) zu einer Lesevorrichtung (106, 602); und
Übertragung des Leseschlüssels (111, 309) von dem Cloud-Credential-Managementserver (102, 308, 406, 504) an die Lesevorrichtung (106, 602).

10. Das Verfahren aus Anspruch 9, ferner umfassend:
Erzeugung des Leseschlüssels (111, 309) auf Grundlage eines Spezifizierers und eines Masterschlüssels (303).

11. Das Verfahren nach einem der Ansprüche 7 bis 10, wobei der Cloud-Credential-Managementserver (102, 308, 406, 504) in Kommunikation mit mehreren Kundencomputern steht, wobei die mehreren Kundencomputer mindestens zwei verschiedene Kunden enthalten.

## Revendications

1. Un procédé, comprenant :
recevoir une notification (401) au moyen d'un dispositif mobile (104, 310, 402) en réponse à une demande de justificatif d'identité provenant d'un client, la notification (401) comportant un localisateur uniforme de ressources (URL) d'un serveur cloud de gestion de justificatifs d'identité (102, 308, 406, 504) ;
authentifier le dispositif mobile (104, 310, 402) au moyen du serveur cloud de gestion de justificatifs d'identité (102, 308, 406, 504) sur la base d'une chaîne d'argument dans l'URL ;
utiliser, au moyen du dispositif mobile (104, 310, 402), des informations dans la notification pour demander au serveur cloud de gestion de justificatifs d'identité (102, 308, 406, 504) de générer un justificatif d'identité (110, 302, 404, 502), le justificatif d'identité (110, 302, 404, 502) étant un justificatif d'identité diversifié unique (110, 302, 404, 502) généré par le serveur cloud de gestion de justificatifs d'identité (102, 308, 406, 504) ;
recevoir, au moyen du dispositif mobile (104, 310, 402), un paquet provenant du serveur cloud de gestion de justificatifs d'identité (102, 308, 406, 504) en réponse à la demande ;
extraire le justificatif d'identité diversifié unique (110, 302, 404, 502) du paquet ; et
stocker le justificatif d'identité diversifié unique (110, 302, 404, 502) dans le dispositif mobile (104, 310, 402) ;
la demande envoyée par le dispositif mobile (104, 310, 402) au serveur cloud de gestion de justificatifs d'identité (102, 308, 406, 504) comportant un identifiant unique associé au dispositif mobile (104, 310, 402) ;
le justificatif d'identité diversifié unique (110, 302, 404, 502) étant généré par le serveur cloud de gestion de justificatifs d'identité (102, 308, 406, 504) en hachant l'identifiant unique avec une clé maîtresse (111, 303) ;
le justificatif d'identité diversifié unique (110, 302, 404, 502) étant d'un format particulier et d'une région particulière au dispositif mobile (104, 310, 402) ; le format du justificatif d'identité diversifié unique (110, 302, 404, 502) étant soit MIFARE Classic ou MIFARE DESFire EV1 ; et le justificatif d'identité diversifié unique (110, 302, 404, 502) étant crypté avant d'être encapsulé dans le paquet.

2. Le procédé selon la revendication 1, dans lequel la notification (401) est au moins l'un/l'une parmi un courrier électronique, un message texte, et une notification push.

3. Le procédé selon les revendications 1 ou 2, dans lequel le paquet est au moins l'un parmi un objet JSON et un message formaté XML.

4. Le procédé selon l'une quelconque des revendications 1-3, comprenant en outre :
décrypter le justificatif d'identité diversifié unique (110, 302, 404, 502) avant de stocker le justificatif d'identité diversifié unique (110, 302, 404, 502) dans le dispositif mobile (104, 310, 402).

5. Le procédé selon l'une quelconque des revendications 1-4, dans lequel le dispositif mobile (104, 310, 402) est un téléphone mobile.

6. Le procédé selon l'une quelconque des revendications 1-5, comprenant en outre :
transmettre, à partir d'un dispositif de lecture (106, 304, 602), une demande destinée au serveur cloud de gestion de justificatifs d'identité (102, 308, 406, 504) aux fins de générer une clé de lecture (111, 309), la demande comportant un spécificateur ;
recevoir la clé de lecture (111, 309) provenant du serveur cloud de gestion de justificatifs d'identité (102, 308, 406, 504) ;
stocker la clé de lecture (111, 309) dans un module d'accès sécurisé du dispositif de lecture (106) ;
utiliser, au moyen du dispositif de lecture (106, 304), la clé de lecture (111, 309) pour communiquer avec le dispositif mobile (104, 310, 402) afin de recevoir au moins une partie du justificatif d'identité diversifié unique (110, 302, 404, 502) provenant du dispositif mobile (104, 310, 402) ;
transmettre, à partir du dispositif de lecture (106, 304), une demande destinée au serveur cloud de gestion de justificatifs d'identité (102, 308, 406, 504) aux fins de transmettre un ou plusieurs justificatifs d'identité de dispositif de lecture (110, 302) au dispositif de lecture (106, 304, 602) ;
recevoir, au moyen du dispositif de lecture (106, 304), les un ou plusieurs justificatifs d'identité de dispositif de lecture (110, 302) provenant du serveur cloud de gestion de justificatifs d'identité (102, 308, 406, 504) ;
stocker les un ou plusieurs justificatifs d'identité de dispositif de lecture (110, 302) dans le module d'accès sécurisé du dispositif de lecture (106, 304) ; et
déterminer, au moyen du dispositif de lecture (106, 304), s'il faut accéder à une demande d'action sur la base d'une analyse de ladite au moins une partie du justificatif d'identité diversifié unique (110, 302, 404, 502) et d'un ou plusieurs des justificatifs d'identité de dispositif de lecture (110, 302).

7. Le procédé selon l'une quelconque des revendications 1-6, comprenant en outre :
recevoir, au moyen du serveur cloud de gestion de justificatifs d'identité (102, 308, 406, 504), la demande aux fins de générer le justificatif d'identité diversifié unique (110, 302, 404, 502) ; et
transmettre, au moyen du serveur cloud de gestion de justificatifs d'identité (102, 308, 406, 504), le justificatif d'identité diversifié unique (110, 302, 404, 502) au dispositif mobile (104, 310, 402).

8. Le procédé selon la revendication 7, dans lequel le dispositif mobile (104, 310, 402) est un téléphone mobile.

9. Le procédé selon l'une quelconque des revendications 7-8, comprenant en outre :
recevoir une demande de clé provenant de l'ordinateur client aux fins d'affecter une clé de lecture (111, 309) à un dispositif de lecture (106, 602) ; et
transmettre la clé de lecture (111, 309) à partir du serveur cloud de gestion de justificatifs d'identité (102, 308, 406, 504) au dispositif de lecture (106, 602) .

10. Le procédé selon la revendication 9, comprenant en outre :
générer la clé de lecture (111, 309) sur la base d'un spécificateur et d'une clé maîtresse (303).

11. Le procédé selon l'une quelconque des revendications 7-10, dans lequel le serveur cloud de gestion de justificatifs d'identité (102, 308, 406, 504) est en communication avec une pluralité d'ordinateurs client, la pluralité d'ordinateurs client comportant au moins deux clients différents.
